# EUROPÄISCHE PATENTSCHRIFT

(11) **EP 3 689 483 B1**
(45) Veröffentlichungstag und Bekanntmachung des Hinweises auf die Patenterteilung: **22.02.2023**
(21) Anmeldenummer: 19000476.2
(22) Anmeldetag: 12.08.2015
(51) Int. Cl.: B07C 3/02

(54) **SORTIERVORRICHTUNG ZUM SORTIEREN VON STÜCKGUT**
DEVICE FOR SORTING PIECE GOODS
DISPOSITIF DE TRI DES MARCHANDISES GÉNÉRALES

(30) Priorität: 16.01.2015 DE 102015200618
(43) Veröffentlichungstag der Anmeldung: 05.08.2020
(62) Teilanmeldung aus: 15752997.5
(73) Patentinhaber: Körber Supply Chain Logistics GmbH, 78467 Konstanz (DE)
(72) Erfinder: ASCHPURWIS, Carsten, 78464 Konstanz (DE)
(74) Vertreter: Müller Schupfner & Partner Patent- und Rechtsanwaltspartnerschaft mbB

(56) Entgegenhaltungen:
- EP-A1- 1 645 340
- WO-A1-00/32502
- CH-A- 495 874
- DE-B3- 10 342 804
- US-A- 3 198 351

## Beschreibung

Die Erfindung betrifft eine Sortiervorrichtung zur Sortierung von Stückgut, mit einer in Betrieb Stückgut zu mehreren Sortierzielen transportierenden Sortiereinrichtung, und mit einer Zufuhreinrichtung, die der Sortiereinrichtung in Betrieb Stückgut zuführt und in einem Übergabebereich übergibt. Ferner betrifft die Erfindung ein Verfahren zum Sortieren von Stückgut mit einer eine Sortiereinrichtung und einer Zufuhreinrichtung aufweisenden Sortiervorrichtung, bei dem Stückgut mit der Zufuhreinrichtung der Sortiereinrichtung zugeführt und in einem Übergabebereich übergeben wird.

Sortiervorrichtungen und -verfahren zum Sortieren von Stückgut sind allgemein bekannt. Um die Zufuhreinrichtung einfach aufbauen zu können, sind bekannte Zufuhreinrichtungen lediglich in der Lage, das der Sortiereinrichtung zuzuführende Stückgut linear in einer Zufuhrrichtung zu bewegen. Um das Stückgut übergeben zu können, verläuft die Zufuhrrichtung im Übergabebereich schräg zur Sortiereinrichtung. Aufgrund der schrägen Zuführung des Stückguts zur Sortiereinrichtung kann es jedoch vorkommen, dass nicht alle Transportpositionen der Sortiereinrichtung durch die Zufuhreinrichtung mit Stückgut beschickbar sind. Um die Sortiereinrichtung effizient betreiben zu können, sind also mehrere Zufuhreinrichtungen vorzusehen. Durch die mehreren Zufuhreinrichtungen entstehen jedoch nicht nur erhöhte Anlagekosten. Vielmehr benötigen mehrere Zufuhreinrichtungen auch viel Platz, der für andere Maschinen und beispielsweise andere Sortiervorrichtungen nicht mehr zur Verfügung steht. Eine derartige Sortiervorrichtung ist beispielsweise in der WO 00/32502 offenbart.

Zu sortierendes Stückgut kann beispielsweise Versandgut, etwa Briefe, Päckchen und/oder Pakete, sein. Sortierziel können also Zustellziele, etwa andere Postzentren oder Zustelladressen sein. Die Sortiervorrichtung weist zum Beispiel dreiunddreißig Zustellziele auf, in die die Stückgüter sortiert werden sollen. Ein Sortierziel kann dabei mehrere Zustelladressen zusammenfassen. Ferner kann die Sortiervorrichtung auch andere Stückgüter, beispielsweise Stückgut, das aus einem Lagerhaus ausgelagert und an einen Empfänger geliefert werden soll, sortieren.

US 3,198,351 offenbart ein Fördersystem zum automatischen und halb-automatischen Transfer von Paketen auf einer Förderstrecke.

EP 1 645 340 A1 zeigt zudem eine Sortiervorrichtung für Stückgut, wie beispielsweise Flaschen, mit mindestens einer Aufnahmestelle und mehreren Abgabestellen und Haltevorrichtungen zum Halten des Stückguts.

Es kann jedoch vorkommen, dass sich eines der Stückgüter nicht ausreichend genau vorpositionieren lässt oder es aus anderen Gründen nicht an die Sortiereinrichtung übergeben werden soll. Bei bekannten Sortiervorrichtungen ist die Zufuhreinrichtung dann anzuhalten und womöglich sogar in einer der Zufuhrrichtung entgegengesetzten Richtung zu betreiben, um nicht übergebbares Stückgut von der Zufuhreinrichtung entfernen zu können.

Der vorliegenden Erfindung liegt somit die Aufgabe zugrunde, eine Sortiervorrichtung und ein Verfahren zum Sortieren von Stückgut bereitzustellen, mit der nicht übergebbares oder nicht übergebenes Stückgut ohne ein Anhalten der Zufuhrvorrichtung entfernt werden kann. Eine weitere Aufgabe kann auch darin bestehen, dass das Stückgut mit geringem Platzbedarf für die Sortiervorrichtung sortierbar ist.

Erfindungsgemäß wird eine Sortiervorrichtung der eingangs genannten Art zur Verfügung gestellt, wobei die Sortiereinrichtung und die Zufuhreinrichtung im Übergabebereich parallel zueinander verlaufend angeordnet sind. Die Sortiereinrichtung weist eine Abladeeinrichtung zur Aufnahme von nicht mit der Zufuhreinrichtung an die Sortiereinrichtung übergebenem Stückgut auf, wobei die Abladeeinrichtung neben oder hinter den Übergabebereich angeordnet ist.

Ferner wird ein Verfahren der eingangs genannten Art zur Verfügung gestellt, wobei das Stückgut im Übergabebereich parallel zur Sortiereinrichtung bewegt wird, und wobei nicht an die Sortiereinrichtung übergebenes Stückgut hinter oder neben dem Übergabebereich entladen wird.

Durch die parallele Anordnung der Sortiereinrichtung und der Zufuhreinrichtung im Übergabebereich und das parallele Zuführen des Stückguts zur Sortiereinrichtung benötigt die Sortiervorrichtung im Vergleich zu bekannten Sortiervorrichtungen weniger Platz. Insbesondere ist der benötigte Platz dadurch reduziert, dass sich die Zufuhreinrichtung im Übergabebereich nicht von der Sortiereinrichtung weg erstreckt, sondern vielmehr zumindest abschnittsweise parallel zu dieser verläuft.

Die erfindungsgemäße Lösung kann zu verschiedene, jeweils für sich vorteilhafte und, sofern nicht anders ausgeführt, beliebig miteinander kombinierbare Ausgestaltungen weiterverbessert werden. Auf diese Ausgestaltungsformen und die mit ihnen verbundenen Vorteile ist im Folgenden eingegangen.

So kann die Zufuhreinrichtung zumindest eine Übergabeeinrichtung aufweisen, mit der Stückgut quer zum Verlauf der Zufuhreinrichtung im Übergabebereich bewegbar ist. Die Übergabeeinrichtung ist beispielsweise ein Quergurtförderer und ausgebildet, das Stückgut quer zu einer Zufuhrrichtung, in der das Stückgut dem Übergabebereich zuführbar ist, zu bewegen. Alternativ kann die Übergabeeinrichtung zum Beispiel ein Schuhsorter, mit dem das Stückgut quer zum Verlauf der Zufuhreinrichtung schiebbar ist, sein. Ferner kann die Übergabeeinrichtung zumindest abschnittsweise kippbar sein und beispielsweise eine einseitig anhebbare Platte aufweisen, von welcher das Stückgut im verkippten beziehungsweise angehobenen Zustand der Schwerkraft folgend herunter rutscht. Folglich kann Stückgut auch bei einer parallel zur Sortiereinrichtung verlaufenden Zufuhreinrichtung, die das Stückgut parallel zur Sortiereinrichtung bewegt, der Sortiereinrichtung quer zu der Zufuhrrichtung übergeben werden.

Eine Zufuhrgeschwindigkeit, mit der die Zufuhreinrichtung Stückgut der Sortiervorrichtung zuführt, kann unabhängig von einer Übergabegeschwindigkeit, mit der Stückgut von der Zufuhreinrichtung und insbesondere von der Übergabeeinrichtung an die Sortiereinrichtung übergeben wird, gesteuert sein. Dadurch, dass die Zufuhrgeschwindigkeit und Übergabegeschwindigkeit unabhängig voneinander gesteuert werden können, können Stückgüter so schnell zugeführt und übergeben werden, dass alle Transportpositionen der Sortiereinrichtung belegbar sind. Die Übergabegeschwindigkeit ist dabei lediglich durch die Länge des Übergabebereiches in Richtung der Zufuhrgeschwindigkeit bestimmt. Folglich ist die Sortiereffizienz der Sortiervorrichtung im Vergleich zu bekannten Sortiervorrichtungen erhöht, da mit geringerem Aufwand ein höherer Durchsatz und insbesondere der maximal mögliche Durchsatz der Übergabeeinrichtung und / oder der Sortiereinrichtung erreicht wird.

Die Sortiervorrichtung kann eine Steuereinrichtung aufweisen, mit der die Zufuhrgeschwindigkeit der Zufuhreinrichtung parallel zur Bewegungsrichtung der Sortiereinrichtung im Übergabebereich abhängig von einer Bewegungsgeschwindigkeit der Sortiereinrichtung steuerbar ist. Die Zufuhrgeschwindigkeit kann also ohne weiteres an die Bewegungsgeschwindigkeit angepasst werden, ohne dass sich dies auf die Übergabegeschwindigkeit auswirkt, wenn der Übergabebereich lang genug ist.

Um einzelne Stückgüter relativ zu Transportpositionen der Sortiereinrichtung positionieren zu können, kann die Zufuhreinrichtung mindestens eine Beschleunigungseinrichtung zur Positionierung von zu übergebendem Stückgut aufweisen.

Mit der Beschleunigungseinrichtung ist die Zufuhrgeschwindigkeit von Stückgut anpassbar, um die Position des Stückgutes bei einem Versatz in der Zufuhrrichtung zur vorbestimmten Transportposition auf der Sortiereinrichtung korrigieren zu können.

Die Beschleunigungseinrichtung kann mehrere Beschleunigungssegmente oder -abschnitte aufweisen, die ausgebildet sind, die Position mehrere Stückgüter unabhängig voneinander an die Sortiereinrichtung anzupassen. So können die Stückgüter unabhängig voneinander und im Wesentlichen gleichzeitig auch dann mit Bezug auf die jeweilige vorbestimmte Transportposition vorpositioniert werden, wenn der Versatz der Stückgüter zu der jeweiligen vorbestimmten Transportposition variiert. Die Beschleunigungssegmente sind einander in der Zufuhrrichtung vorzugsweise nachgeschaltet und abhängig voneinander steuerbar.

Die Steuereinrichtung ist also vorzugsweise ausgebildet, die Zufuhrgeschwindigkeit zu variieren, um zu übergebendes Stückgut zu der vorbestimmten Transportposition zu positionieren. Weist die Sortiervorrichtung mehrere Beschleunigungssegmente auf, so ist die Steuervorrichtung vorzugsweise ausgebildet, die Beschleunigungssegmente unabhängig voneinander anzusteuern und somit auf dem jeweiligen Beschleunigungssegment befindliches Stückgut unabhängig von auf einem anderen der Beschleunigungssegmente vorhandenen Stückgut zu beschleunigen.

Die Übergabeeinrichtung ist der Beschleunigungseinrichtung vorzugsweise nachgeschalten, um das Stückgut zunächst positionieren und anschließend das positionierte Stückgut übergeben zu können.

Die Sortiervorrichtung kann ferner ein der Übergabeeinrichtung und/oder der Beschleunigungseinrichtung vorgeschaltete Transporteinrichtung, beispielsweise ein Transportband, aufweisen, auf das zu sortierendes Stückgut gelegt und mit dem das Stückgut in Richtung auf den Übergabebereich transportiert wird.

Insbesondere aus Sicht der Beschleunigungseinrichtung, der Transporteinrichtung und/oder in der Zufuhrrichtung kann die Abladeeinrichtung neben oder hinter dem Übergangsbereich angeordnet sein. Folglich braucht das Stückgut nicht entgegen der Zufuhrrichtung bewegt zu werden, da die Abladevorrichtung in der Zufuhrrichtung hinter der Beschleunigungseinrichtung angeordnet ist.

Beispielsweise ist die Zufuhreinrichtung zumindest abschnittsweise zwischen der Sortiereinrichtung und der Abladeeinrichtung angeordnet. Insbesondere kann die Übergabeeinrichtung der Zufuhreinrichtung zwischen der Sortiereinrichtung und der Abladeeinrichtung angeordnet sein. Bei einer derartig angeordneten Übergabeeinrichtung reicht es aus, wenn die Übergabeeinrichtung das nicht übergebbare Stückgut nicht in der Übergaberichtung in Richtung auf die Sortiereinrichtung zu, sondern in einer entgegen der Übergaberichtung verlaufenden Abladerichtung von der Sortiereinrichtung weg und zur Abladeeinrichtung hin transportiert. Eine derartige Funktion kann zum Beispiel mit einem Quergurtförderer einfach zur Verfügung gestellt werden.

Nicht an die Sortiervorrichtung übergebenes Stückgut kann also ohne weiteres in Bewegungsrichtung hinter oder neben dem Übergabebereich entladen werden, wodurch der Sortierdurchsatz der Sortiervorrichtung durch nicht übergebbares Stückgut nicht oder nur geringfügig gemindert wird, ohne dass die Zufuhreinrichtung hierfür anzuhalten oder gar rückwärts zu betreiben ist.

Die Übergabeeinrichtung kann wenigstens ein Übergabesegment aufweisen, das sich im Übergabebereich mit der Transportgeschwindigkeit der Sortiereinrichtung und parallel zur Sortiereinrichtung bewegt. Entlang der Bewegungsgeschwindigkeit der Sortiereinrichtung ist das wenigstens eine Übergabesegment also zu einer der Transportpositionen der Sortiereinrichtung positioniert und behält diese Position zumindest im Übergabebereich bei.

Weist die Übergabeeinrichtung mehrere Übergabesegmente auf, so kann die Übergabeeinrichtung mehrere Stückgüter aufnehmen und nacheinander oder gleichzeitig an die Sortiereinrichtung und/oder die Abladeeinrichtung übergeben. Hierdurch ist der Durchsatz der Übergabeeinrichtung im Vergleich zur Übergabeeinrichtung mit nur einem Übergabesegment erhöht.

Die einzelnen Übergabesegmente können getrennt voneinander ansteuerbar sein, beispielsweise mit Hilfe der Steuereinrichtung. Insbesondere kann die Richtung, in der ausgewählte oder alle der Übergabesegmente Stückgut an die Sortiereinrichtung und/oder an die Abladeeinrichtung übergeben werden, unabhängig steuerbar sein, sodass eines der Übergabesegmente ein nicht an die Sortiereinrichtung übergebbares Stückgut an die Abladeeinrichtung übergibt und ein anderes Übergabesegmente ein anderes Stückgut an die Sortiereinrichtung übergibt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 ein Ausführungsbeispiel einer erfindungsgemäßen Steuervorrichtung, und
Figur 2 ein Ausführungsbeispiel eines erfindungsgemäßen Verfahrens zum Sortieren von Stückgut.

Im Folgenden ist die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen dargelegt wurde.

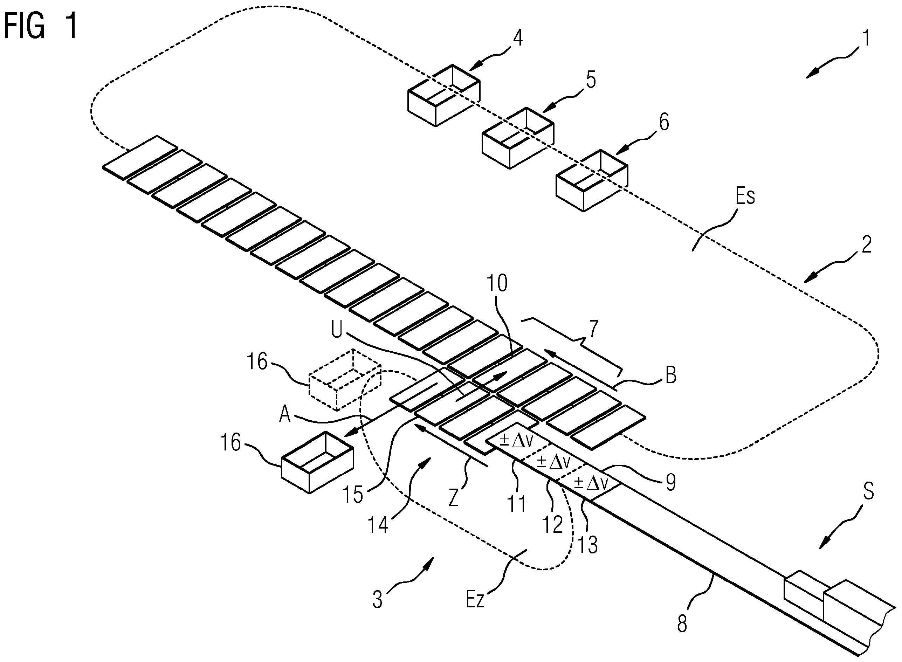

Zunächst sind Aufbau und Funktion einer erfindungsgemäßen Sortiervorrichtung zur Sortierung von Stückgut mit Bezug auf das Ausführungsbeispiel der Fig. 1 beschrieben.

Figur 1 zeigt die Sortiervorrichtung 1 schematisch in einer Perspektivansicht. Die Sortiervorrichtung 1 weist eine Sortiereinrichtung 2 und eine Zufuhreinrichtung 3 auf. Mit der Zufuhreinrichtung 3 ist zu sortierendes Stückgut S der Sortiereinrichtung 2 zuführbar. Die Sortiereinrichtung 2 weist das Stückgut S Sortierzielen 4, 5, 6 zu und übergibt das Stückgut S dem zugewiesenen Sortierziel 4, 5, 6. Die Sortierziele 4, 5, 6 können Container sein die unabhängig von der Sortiervorrichtung 1 bereit gestellt sind. Insgesamt sind beispielhaft drei Sortierziele 4, 5, 6 dargestellt. Die Sortiervorrichtung 1 kann jedoch auch mehr oder weniger als die drei gezeigten Sortierziele 4, 5, 6 aufweisen.

Die Zufuhreinrichtung 3 verläuft zumindest in einem Übergabebereich 7, in dem Stückgut S von der Zufuhreinrichtung 3 an die Sortiereinrichtung 2 übergeben wird, parallel zur Sortiereinrichtung 2. Im Übergabebereich 7 verläuft eine Bewegungsrichtung B der Sortiereinrichtung 2 parallel zu einer Zufuhrrichtung Z der Zufuhreinrichtung 3. In der Zufuhrrichtung Z bewegt die Zufuhreinrichtung 3 Stückgut S zum beziehungsweise im Übergabebereich 7. In der Bewegungsrichtung B transportiert die Sortiereinrichtung 2 das von der Zufuhreinrichtung 3 entgegengenommene Stückgut S im Übergabebereich 7 und aus dem Übergabebereich 7 heraus.

Die Zufuhreinrichtung 3 kann eine Transporteinrichtung 8, beispielsweise ein Transportband, zur Entgegennahme des zu sortierenden Stückgutes S aufweisen. Das Stückgut S kann von einem Bediener der Sortiervorrichtung 1 oder von einer vorgeschalteten Vorrichtung auf die Transporteinrichtung 8 gelegt werden. Die Transporteinrichtung 8 transportiert das Stückgut S in Richtung auf den Übergabebereich 7.

In der Zufuhrrichtung Z kann auf die Transporteinrichtung 8 eine optimale Beschleunigungseinrichtung 9 folgen, die der Transporteinrichtung 8 nachgeschaltet sein kann. Die Beschleunigungseinrichtung 9 kann zu sortierendes Stückgut S von der Transporteinrichtung 8 übernehmen. Mit der Beschleunigungseinrichtung 9 ist die Geschwindigkeit des zu sortierenden Stückgutes S an die Bewegungsgeschwindigkeit der Sortiereinrichtung 2 anpassbar. Zusätzlich oder alternativ kann die Beschleunigungseinrichtung 9 die Geschwindigkeit des Stückgutes S ändern, dieses also beschleunigen um das Stückgut S an eine vordefinierte Transportposition 10, an welche das Stückgut S übergeben werden soll, zu positionieren. Die Transposition 10 kann ein Einzelgutträger der Sortiereinrichtung 10 sein, der das Stückgut S aufnimmt und in dem das Stückgut S zu einem der Sortierziele 4,5,6 bewegt wird. Soll nur jeweils ein Stückgut S positioniert werden, reicht es aus, wenn die Beschleunigungseinrichtung 9 ein und vorzugsweise nicht mehr als ein Beschleunigungssegment aufweist.

Alternativ kann die Beschleunigungseinrichtung mehrere und beispielsweise drei Beschleunigungssegmente 11, 12, 13 aufweisen, welche unabhängig voneinander Stückgut S beschleunigen können. Die Beschleunigungssegmente 11, 12, 13 sind in der Zufuhrrichtung Z vorzugsweise hintereinander angeordnet, um das Stückgut S platzsparend beschleunigen zu können. Insbesondere kann es notwendig sein, das Stückgut S zu der vor definierten Transportposition 10 zu positionieren, wenn das Stückgut S nicht perfekt positioniert auf die Transportrichtung 8 gelegt wurde.

Im Übergabebereich 7 weist die Sortiereinrichtung 2 des Ausführungsbeispiels der Figur 1 eine Übergabeeinrichtung 14 auf. Die Übergabeeinrichtung 14 ist ausgebildet, Stückgut S in einer quer zur Zufuhrrichtung Z verlaufenden Übergaberichtung U an die Sortiereinrichtung 2 und insbesondere an die vordefinierte Transportposition 10 zu übergeben. Die Übergabeeinrichtung 14 kann ein Übergabesegment 15, zum Beispiel ein Quergurtförderer, aufweisen, der das Stückgut S in der Übergaberichtung U bewegt. Vorzugsweise bewegt das Übergabesegment 15 in der Zufuhrrichtung Z und parallel zur Bewegungsrichtung B der Sortiereinrichtung 2. Dabei beträgt die Geschwindigkeit des Übergabesegmentes 15 in der Zufuhrrichtung Z bevorzugt der Geschwindigkeit der vordefinierten Transportposition 10 im Übergabebereich 7.

Um mehrere Stückgüter S oder übergroßes Stückgut S, welches in der Zufuhrrichtung Z eine größere Ausdehnung als das Übergabesegment 15 aufweist, übergeben zu können, kann die Übergabeeinrichtung 14 mehrere Übergabesegmente 15 aufweisen. Im Übergabebereich 7 können die Übergabesegmente 15 in der Zufuhrrichtung Z hintereinander angeordnet sein.

Im Betrieb der Sortiervorrichtung 1 kann ein in eines der Sortierziele 4,5,6 zu sortierendes Stückgut S von der Transporteinrichtung 8 an das Beschleunigungssegment 13 übergeben werden. Mit dem Beschleunigungssegment 13 kann das Stückgut S beschleunigt und somit mit Bezug auf die vordefinierte Transportposition 10 vorpositioniert werden. Weist die Beschleunigungseinrichtung 9 ein weiteres Beschleunigungssegment und beispielsweise das Beschleunigungssegment 11 auf, kann die Geschwindigkeit des zu übergebende Stückgutes S durch das Beschleunigungssegment 11 an die Transportgeschwindigkeit der Sortiereinrichtung 2 im Übergabebereich 7 angepasst werden. Vom Beschleunigungssegment 11 wird das vorpositionierte Stückgut S, dessen Geschwindigkeit nunmehr der Geschwindigkeit der Sortiereinrichtung 2 und der Übergabeeinrichtung 14 entspricht, an die Übergabeeinrichtung 14 und insbesondere an das Übergabesegment 15 übergeben.

Unabhängig von der Geschwindigkeit des Stückgutes S in der Bewegungsrichtung B beziehungsweise in der Zufuhrrichtung Z kann das Stückgut S mit einer Übergabegeschwindigkeit in der Übergaberichtung U an die Sortiereinrichtung 2 und insbesondere an die vordefinierte Transportposition 10 übergeben werden. Die Vorpositionierung des Stückgutes S, die Zufuhrgeschwindigkeit und die Übergabegeschwindigkeit sind also im Wesentlichen unabhängig voneinander steuerbar, wodurch alle Transportpositionen 10 mit zu sortierendem Stückgut S belegbar und folglich der maximal mögliche Durchsatz der Sortiereinrichtung 2 mit nur einer Zufuhreinrichtung 3 erreichbar ist.

Es kann vorkommen, dass Stückgut S nicht an die Sortiereinrichtung 2 übergebbar ist. Beispielsweise kann keine freie Transportposition 10 zur Aufnahme des Stückgutes S zur Verfügung stehen. Ferner kann es zum Beispiel sein, dass das Stückgut S zu groß oder nicht ausreichend genau positionierbar ist. Zur Aufnahme von nicht übergebbarem Stückgut S kann die Sortiervorrichtung 1 eine Abladeeinrichtung 16 aufweisen. Die Abladeeinrichtung 16 kann in der Zufuhrrichtung Z neben der Übergabeeinrichtung 14 positioniert sein. Insbesondere kann die Übergabeeinrichtung 14 zwischen der Abladeeinrichtung 16 und der Sortiereinrichtung 14 angeordnet sein. Zum Beispiel kann die Abladeeinrichtung 16 quer zur Zufuhrrichtung Z eine Projektion des Übergabebereichs 7 quer zur Zufuhrrichtung Z überlappen. Nicht übergebbares Stückgut S kann folglich einfach in einer entgegen der Übergaberichtung U verlaufenden Abladerichtung A einfach von der Übergabeeinrichtung 14 an die Abladeeinrichtung 16 übergeben werden.

Weist die Übergabeeinrichtung 14 das als Quergurtförderer ausgebildete Übergabesegment 15 auf, so kann dieses das nicht übergebbare Stückgut S ohne weiteres entgegen der Übergaberichtung U und in der Abladerichtung A zur Abladeeinrichtung 16 bewegen. Alternativ kann die Abladeeinrichtung 16 in der Zufuhrrichtung Z hinter der Zufuhreinrichtung 3 und insbesondere hinter der Übergabeeinrichtung 15 angeordnet sein, sodass nicht an die Sortiereinrichtung 2 übergebenes Stückgut S in der Zufuhrrichtung Z in die Abladeeinrichtung 16 verbracht werden kann.

Sollte es gewünscht sein, dass beispielsweise aus unterschiedlichen Gründen nicht übergebbare Stückgüter S vorsortiert werden, kann die Sortiervorrichtung 1 mehrere Abladeeinrichtungen 16 aufweisen, die quer zur Zufuhrrichtung Z neben dem Übergabebereich 7 und/oder in der Zufuhrrichtung Z hinter dem Übergabebereich 7 angeordnet sind.

Die Übergabesegmente 15 können auch als Bereitstellungsträger bezeichnet werden.

Sowohl die Transportpositionen 10 als auch die Übergabesegmente 15 können als Quergurtförderer ausgebildet sein. Alternativ können die Transportpositionen 10 und/oder die Übergabesegmente 15 kippbar ausgebildet sein, um in einem verkippten Zustand aufgrund der Schwerkraft Stückgut S durch Rutschen übergeben zu können.

Die Sortiereinrichtung 2 und die Zufuhreinrichtung 3 sind vorzugsweise jeweils als ein geschlossener Kreislauf ausgebildet, wobei eine Ebene Ez, in der sich der geschlossene Kreislauf der Übergabeeinrichtung 14 befindet, vorzugsweise senkrecht zu einer Ebene Es, in der die Transportpositionen 10 bewegt werden, und beispielsweise vertikal angeordnet ist. Durch die vertikale Ausrichtung der Ebene Ez der Zufuhreinrichtung 3 wird in der horizontalen Richtung der benötigte Bauraum für die Sortiervorrichtung 1 weiter verringert.

Wird flächiges Sortiergut, beispielsweise Briefe, auf die Transporteinrichtung 8 aufgebracht, kann dieses zumindest zunächst stehend mit der Transporteinrichtung 8 bewegt werden. Im weiteren Verlauf kann das flächige Transportgut um eine parallel zur Zufuhrrichtung Z verlaufende Achse herum auf die Transporteinrichtung 8 fallen, um dieses ohne weiteres und insbesondere ohne eine Führung weiter transportieren zu können.

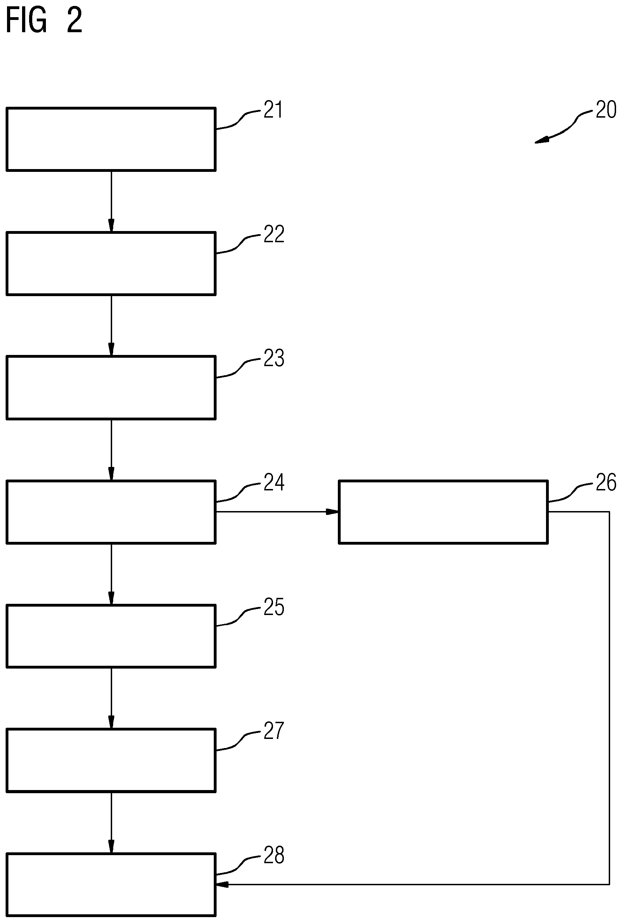

Figur 2 zeigt ein erfindungsgemäßes Verfahren zum Sortieren von Stückgut S als ein Flussdiagramm mit Bezug auf das Ausführungsbeispiel der Figur 2. Für Elemente des Ausführungsbeispiels der Figur 1, die zur Darstellung des Verfahrens hilfreich sind, sind im Folgenden dieselben Bezugszeichen verwendet.

Figur 2 zeigt das Verfahren 20 zum Sortieren von Stückgut S als ein Flussdiagramm mit mehreren Verfahrensschritten. Im ersten Verfahrensschritt 21 wird das Verfahren 20 gestartet. Beispielsweise wird die Sortiervorrichtung 1 im Schritt 21 gestartet. Auf den ersten Verfahrensschritt 21 folgt ein weiterer Verfahrensschritt 22, in den die Zufuhreinrichtung 3 und beispielsweise deren Transporteinrichtung 8 mit Stückgut S beschickt werden.

Im optionalen Verfahrensschritt 23 kann das Stückgut S vorpositioniert und optional dessen Geschwindigkeit an die Sortiereinrichtung 2 angepasst werden, zum Beispiel mit der Beschleunigungseinrichtung 9.

Im nächsten Verfahrensschritt 24 wird Stückgut S der Sortiereinrichtung 2 zugeführt und dabei zumindest im Übergabebereich 7 parallel zur Sortiereinrichtung 2 und insbesondere zu deren Bewegungsrichtung B im Übergabebereich 7 bewegt.

Auf den Verfahrensschritt 24 folgt der Verfahrensschritt 25, in dem das Stückgut S senkrecht zur Bewegungsrichtung B an die Sortiereinrichtung 2 und insbesondere an die vordefinierte Transportposition 10 übergeben wird. Sollte das Stückgut S nicht an die Sortiereinrichtung 2 übergebbar sein, beispielsweise weil die vorbestimmte Transportposition 10 belegt oder das Stückgut S zu groß ist, so kann auf den Verfahrensschritt 24 alternativ der Verfahrensschritt 26 folgen, in dem das Stückgut S senkrecht oder parallel zur Bewegungsrichtung B abgegeben wird, insbesondere von der Zufuhrrichtung 3 an die Abladeeinrichtung 16.

Wurde das Stückgut S an die Sortiereinrichtung 2 übergeben so folgt auf den Verfahrensschritt 25 der Verfahrensschritt 27, in dem Stückgut S in die Sortierziel 4,5,6 einsortiert wird.

Mit dem Verfahrensschritt 28 endet das Verfahren, zum Beispiel wenn kein weiteres Stückgut S zu sortieren.

Die Erfindung betrifft also eine Sortiervorrichtung und ein Verfahren zum Sortieren von Stückgut. Um eine Sortiereinrichtung der Sortiervorrichtung mit lediglich einer Zufuhreinrichtung so mit Stückgut beschicken zu können, dass die Sortiereinrichtung mit einem hohen Durchsatz betreibbar ist, ist erfindungsgemäß vorgesehen, dass die Sortiereinrichtung und die Zufuhreinrichtung in einem Übergabebereich, in dem Stückgut von der Zufuhreinrichtung an die Sortiereinrichtung übergeben wird, parallel zueinander verlaufend angeordnet sind.

## Patentansprüche

1. Sortiervorrichtung (1) zur Sortierung von Stückgut (S), mit einer im Betrieb Stückgut (S) zu mehreren Sortierzielen (4, 5, 6) transportierenden Sortiereinrichtung (2), und mit einer Zufuhreinrichtung (3), die der Sortiereinrichtung (2) im Betrieb Stückgut (S) zuführt und in einem Übergabebereich (7) übergibt, wobei die Sortiereinrichtung (2) und die Zufuhreinrichtung (3) im Übergabebereich (7) parallel zueinander verlaufend angeordnet sind; **dadurch gekennzeichnet, dass** die Sortiervorrichtung (1) eine Abladeeinrichtung (16) zur Aufnahme von nicht von der Zufuhreinrichtung (3) an die Sortiereinrichtung (2) übergebenem Stückgut (S) aufweist, wobei die Abladeeinrichtung (16) neben oder hinter dem Übergabebereich (7) angeordnet ist.

2. Sortiervorrichtung (1) nach Anspruch 1, **dadurch gekennzeichnet, dass** die Zufuhreinrichtung (3) zumindest eine Übergabeeinrichtung (14) aufweist, mit der Stückgut (S) quer zum Verlauf der Zufuhreinrichtung (3) im Übergabebereich (7) bewegbar ist.

3. Sortiervorrichtung (1) nach Anspruch 1 oder 2, **dadurch gekennzeichnet, dass** die Zufuhreinrichtung (3) mindestens eine Beschleunigungseinrichtung (9) zur Positionierung von zu übergebenden Stückgut (S) aufweist.

4. Sortiervorrichtung (1) nach Anspruch 3, **dadurch gekennzeichnet, dass** die Beschleunigungseinrichtung (9) mehrere Beschleunigungssegmente (11, 12, 13) aufweist, die ausgebildet sind, die Position mehrere Stückgüter (S) unabhängig voneinander an die Sortiereinrichtung (2) anzupassen.

5. Sortiervorrichtung (1) nach Anspruch 3 oder 4, **dadurch gekennzeichnet, dass** die Übergabeeinrichtung (14) der Beschleunigungseinrichtung (9) nachgeschaltet ist.

6. Sortiervorrichtung (1) nach Anspruch 1, **dadurch gekennzeichnet, dass** die Zufuhreinrichtung (3) zumindest abschnittsweise zwischen der Sortiereinrichtung (2) und der Abladeeinrichtung (16) angeordnet ist.

7. Verfahren (20) zum Sortieren von Stückgut (S) mit einer eine Sortiereinrichtung (2) und eine Zufuhreinrichtung (3) aufweisenden Sortiervorrichtung, bei dem Stückgut (S) mit der Zufuhreinrichtung (3) der Sortiereinrichtung (2) zugeführt und in einem Übergabebereich (7) übergeben wird, wobei das Stückgut (S) im Übergabebereich (7) zumindest abschnittsweise parallel zur Sortiereinrichtung bewegt wird;
**dadurch gekennzeichnet, dass** nicht an die Sortiereinrichtung (2) übergebenes Stückgut (S) hinter oder neben dem Übergabebereich (7) entladen wird.

8. Verfahren (20) nach Anspruch 7, **dadurch gekennzeichnet, dass** eine Zufuhrgeschwindigkeit, mit der die Zufuhreinrichtung (3) Stückgut (S) in einer Zufuhrrichtung (S) der Sortiereinrichtung (2) zuführt, unabhängig von einer Übergabegeschwindigkeit, mit der Stückgut (S) von der Zufuhreinrichtung (3) in einer Übergaberichtung (U) an die Sortiereinrichtung (2) übergeben wird, gesteuert wird.

## Claims

1. Sorting apparatus (1) for sorting articles (S), having a sorting device (2) that transports articles (S) to a plurality of sorting destinations (4, 5, 6) during operation, and having a feed device (3) which feeds articles (S) to the sorting device (2) during operation and transfers them in a transfer area (7), wherein the sorting device (2) and the feed device (3) are arranged so as to extend parallel to one another in the transfer area (7); **characterized in that** the sorting apparatus (1) has an unloading device (16) for receiving articles (S) that are not transferred from the feed device (3) to the sorting device (2), wherein the unloading device (16) is arranged next to or downstream of the transfer area (7).

2. Sorting apparatus (1) according to Claim 1, **characterized in that** the feed device (3) has at least one transfer device (14) with which the articles (S) are movable transversely to the course of the feed device (3) in the transfer area (7).

3. Sorting apparatus (1) according to Claim 1 or 2, **characterized in that** the feed device (3) has at least one acceleration device (9) for positioning articles (S) to be transferred.

4. Sorting apparatus (1) according to Claim 3, **characterized in that** the acceleration device (9) has a plurality of acceleration segments (11, 12, 13) which are configured to adapt the position of a plurality of articles (S) to the sorting device (2) independently of one another.

5. Sorting apparatus (1) according to Claim 3 or 4, **characterized in that** the transfer device (14) is connected downstream of the acceleration device (9).

6. Sorting apparatus (1) according to Claim 1, **characterized in that** the feed device (3) is arranged at least in part between the sorting device (2) and the unloading device (16).

7. Method (20) for sorting articles (S) using a sorting apparatus having a sorting device (2) and a feed device (3), in which articles (S) are fed to the sorting device (2) by the feed device (3) and transferred in a transfer area (7), wherein the articles (S) are moved at least in part parallel to the sorting device in the transfer area (7) ;
**characterized in that** articles (S) not transferred to the sorting device (2) are unloaded downstream of or next to the transfer area (7).

8. Method (20) according to Claim 7, **characterized in that** a feed rate at which the feed device (3) feeds articles (S) in a feed direction (S) to the sorting device (2) is controlled independently of a transfer rate at which the articles (S) are transferred in a transfer direction (U) from the feed device (3) to the sorting device (2).

## Revendications

1. Dispositif de tri (1) pour trier des marchandises de détail (S), comportant un organe de tri (2) qui, en fonctionnement, transporte des marchandises de détail (S) vers plusieurs destinations de tri (4, 5, 6), et un organe d'alimentation (3) qui, en fonctionnement, amène des marchandises de détail (S) à l'organe de tri (2) et les transfère à celui-ci dans une zone de transfert (7),
dans lequel l'organe de tri (2) et l'organe d'alimentation (3) sont disposés de manière à s'étendre parallèlement l'un à l'autre dans la zone de transfert (7) ;
**caractérisé en ce que**
le dispositif de tri (1) comprend un organe de déchargement (16) destiné à recevoir des marchandises de détail (S) non transférées par l'organe d'alimentation (3) à l'organe de tri (2), l'organe de déchargement (16) étant disposé à côté ou derrière la zone de transfert (7).

2. Dispositif de tri (1) selon la revendication 1,
**caractérisé en ce que** l'organe d'alimentation (3) comprend au moins un organe de transfert (14) avec lequel des marchandises de détail (S) peuvent être déplacées dans la zone de transfert (7) transversalement à la trajectoire de l'organe d'alimentation (3).

3. Dispositif de tri (1) selon la revendication 1 ou 2,
**caractérisé en ce que** l'organe d'alimentation (3) comprend au moins un organe d'accélération (9) pour le positionnement des marchandises de détail (S) à transférer.

4. Dispositif de tri (1) selon la revendication 3,
**caractérisé en ce que** l'organe d'accélération (9) comprend plusieurs segments d'accélération (11, 12, 13) qui sont réalisés pour adapter la position de plusieurs marchandises de détail (S) indépendamment les unes des autres à l'organe de tri (2).

5. Dispositif de tri (1) selon la revendication 3 ou 4,
**caractérisé en ce que** l'organe de transfert (14) est monté en aval de l'organe d'accélération (9).

6. Dispositif de tri (1) selon la revendication 1,
**caractérisé en ce que** l'organe d'alimentation (3) est disposé au moins localement entre l'organe de tri (2) et l'organe de déchargement (16).

7. Procédé (20) pour trier des marchandises de détail (S) avec un dispositif de tri comprenant un organe de tri (2) et un organe d'alimentation (3),
dans lequel, au moyen de l'organe d'alimentation (3), des marchandises de détail (S) sont amenées à l'organe de tri (2) et sont transférées à celui-ci dans une zone de transfert (7),
les marchandises de détail (S) sont déplacées dans la zone de transfert (7) au moins localement parallèlement à l'organe de tri ;
**caractérisé en ce que**
les marchandises de détail (S) non transférées à l'organe de tri (2) sont déchargées derrière ou à côté de la zone de transfert (7).

8. Procédé (20) selon la revendication 7,
**caractérisé en ce qu'**une vitesse d'alimentation, à laquelle l'organe d'alimentation (3) amène des marchandises de détail (S) à l'organe de tri (2) dans une direction d'alimentation (S), est commandée indépendamment d'une vitesse de transfert, à laquelle les marchandises de détail (S) sont transférées de l'organe d'alimentation (3) à l'organe de tri (2) dans une direction de transfert (U).
